# EUROPEAN PATENT SPECIFICATION

(11) **EP 2 841 765 B1**
(45) Date of publication and mention of the grant of the patent: **25.05.2016**
(21) Application number: 13814141.1
(22) Date of filing: 20.12.2013
(51) Int. Cl.: F03D 7/02, F16D 65/12, F16D 65/00

(54) **WIND TURBINE PROVIDED WITH YAW BRAKE**
WINDTURBINE MIT AZIMUTBREMSE
ÉOLIENNE POURVUE D'UN FREIN DE LACET

(30) Priority: 24.05.2013 EP 13169205
(43) Date of publication of application: 04.03.2015
(73) Proprietor: S.B. Patent Holding ApS, 5882 Vejstrup (DK)
(72) Inventor: JENSEN, Jens-Martin, DK-7000 Fredericia (DK); WOODS, James A.W., DK-5874 Hesselager (DK)
(74) Representative: COPA Copenhagen Patents
(86) International application number: PCT/EP2013/077751
(87) International publication number: WO 2014/187510

(56) References cited:
- AU-A1- 2008 317 692
- CN-A- 102 493 917
- DE-A1- 1 480 125
- DE-A1- 2 620 261
- DE-A1-102008 008 437
- US-A- 4 315 563
- US-A1- 2011 171 022

## Description

### Technical Field

The present invention relates to a wind turbine provided with a yaw brake.

### Background

A wind turbine comprises a nacelle or machine housing carrying the electricity producing parts, blades as well as a yaw system which controls orientation of the wind turbine rotor relative to the prevailing wind direction. If the wind turbine is not oriented correctly, the wind will impose uneven loads on the rotor and will seriously reduce the efficiency of the wind turbine. Therefore, the function of the yaw system is important in order to improve the efficiency and prolong the lifetime of the wind turbine.

The yaw system often comprises a toothed brake disc or ring fixed to the tower and a motor activated gear attached to the nacelle and meshing with the toothed gear so that activation of the motor results in a revolving of the nacelle thereby producing the yaw motion of the nacelle. The yaw drive or gear may also be separated from the brake disc.

The yaw system may be provided with ball bearings or sliding bearings for the yaw motion. In wind turbines fitted with a ball bearing for the yaw motion, the nacelle can rest on the ball bearing, which allows the nacelle to revolve around the vertical axis of the tower. The ball bearing may also hold the nacelle on to the tower top in the case of strong winds, where the wind forces on the nacelle tends to blow the nacelle off the tower. Variations in the wind speed may also cause the nacelle to yaw. In particular large wind turbines often use sliding bearings. However, the wind forces on the nacelle will still try to blow the nacelle off the tower and as a wind turbines without a ball bearing no longer have the down hold force that the ball bearing provide, the down hold force will have to come from somewhere else. Therefore, the yaw brake not only functions as a means to maintain the nacelle and rotor in the correct yaw position but also provides the necessary down hold force.

The yaw brakes are typically engaged for extended periods of time in order to ensure that the nacelle is maintained in the correct position. The yaw brake typically comprises a brake calliper that in turn comprises at least one brake piston and a brake pad provided in a receiving part of the calliper. The brake disc is arranged in the receiving part of the brake calliper, and when the brake piston is engaged, the brake pad is compressed against the brake disc, thus providing a braking force due to a frictional engagement between the brake pad and the brake disc. The yaw brakes may also be partly engaged during yawing in order to dampen the yaw movement and reduce vibrations to the nacelle and rotor.

The yaw brake is during use exposed to various impurities, such as brake dust from the brake pads due to wear and airborne dust. Since the yaw brakes are engaged for long periods of time and with a high braking force of several tons, the yaw brakes tend to compact the dust on the surface of the brake pads and disc, thereby in particular forming a sort of glazing on the surface of the brake pads. This problem is further enhanced by the fact that the brake disc is arranged in a horizontal position, whereby the dust settles on the disc and brake pads. As a result, the surface desired for efficient and quiet operation of the brake pads and the friction coefficient may be affected, which in turn may lead to brake noise and vibrations as well as poor durability for the brake pads. The replacement time may thus also be shortened and the yaw brake system demanding service more often.

Document CN 102 493 917 A discloses a wind turbine according to the preamble of claim 1.

### Disclosure of the Invention

It is an object of the invention to obtain a wind turbine, which overcomes or ameliorates at least one of the disadvantages of the prior art or which provides a useful alternative.

According to the invention this is obtained by a wind turbine comprising a number of wind turbine blades extending substantially radially from a hub on a main shaft having a substantially horizontal axis, the wind turbine blades together with the hub forming a rotor, which can be put into rotation by wind. The main shaft is rotatable mounted in a nacelle that is mounted on top of a tower, and the nacelle may be rotated around a vertical axis in relation to the tower so as to adjust the rotor in relation to a prevailing wind direction. The wind turbine further comprises a yaw brake comprising a brake calliper and a brake disc or ring having a first side with a first surface and second side with a second surface, the yaw brake, when activated, acting as a rotation restriction of the nacelle in relation to the tower. The brake disc or brake ring is provided with one or more grooves formed in the first surface and/or the second surface.

The grooves formed in the surface(s) of the brake disc will function as an anti-glazing groove. Since the brake force is applied for long periods of time, the glazing will come into contact with the grooves, when the nacelle is yawed. Thereby, the grooves will shear off the glazing as the brake pads pass the groove. This is partly obtained by the pressure on the glazing being relieved, when it passes over the groove, but may also be enhanced by having an appropriate groove shape and size.

In practice a yaw brake typically comprise a plurality of brake callipers disposed around the brake disc or ring. Throughout the description, the terms brake disc or brake ring are used interchangeably.

The brake disc is preferably arranged in a substantially horizontal position, whereby the first surface is an upper surface of the brake disc, and the second surface is a lower surface of the brake disc. Additionally, the brake disc is preferably stationary mounted, e.g. in the tower.

The yaw brake is applicable to both yaw systems using ball bearings and yaw systems using sliding bearings.

According to an advantageous embodiment, the one or more grooves are formed so that they extend to one or more peripheral parts of the brake disc or ring. Thereby, the grooves may direct dust that has been sheared off from the brake pad to the periphery of disc or ring, thereby removing the dust from the brake disc. If the disc is shaped as a ring, the peripheral part may either be the inner periphery or the outer periphery of the ring. The grooves may also extend from the inner periphery to the outer periphery.

According to another advantageous embodiment, the one or more grooves are oriented so that they extend substantially transverse direction compared to the brake pad. Thereby, the sidewalls may apply a shearing force in a transverse direction to the brake pads.

According to a preferred embodiment, the yaw brake system further includes at least a first brush comprising bristles, and which is arranged so as to contact the first surface and/or the second surface of the brake disc or ring for facilitating removal of dust from the one or more grooves formed in the first surface and/or the second surface. While the groove in general may be self-cleaning, sticky dust may accumulate in the groove over time, in particular in environments with high humidity. The brush may facilitate further removal of the dust and thereby prevent the accumulation of dust altogether. The brush should thus be arranged to further promote the migration of dust towards the peripheral part of the brake disc or ring.

The first brush is of course arranged so that the bristles of the brush move along the first and/or the second surface of the brake disc or ring, when the wind turbine yaws, which will facilitate the removal of dust from the one or more grooves. This can be obtained by mounting the brush to the moving part of the yaw brake system. The brushes may for instance be attached to sides of the brake callipers. It is also contemplated that the first brush may be integrally formed within the brake calliper. In embodiments, where the brake system is stationary and the brake disc rotates during yawing, the first brush should instead be arranged stationary.

The first brush is preferably arranged between two brake callipers arranged along the brake ring or disc.

According to an advantageous embodiment, the first brush is oriented substantially parallel to a radius of the brake disc or ring. With substantially parallel is meant that the orientation may vary up to +/- 25 degrees.

According to another advantageous embodiment, the brush has an end which loosely supported or pivotally supported. Thereby, the brush may vary its orientation, e.g. based on a yaw direction. The brush end is loosely or pivotally supported at a peripheral part of the brake disc or ring, e.g. by letting the end be supported at an inner peripheral part of a brake ring.

The yaw brake system is further provided with one or more stops for limiting an angular movement of the brush. The stops may for instance be provided by the brake calliper. The limit for angular movement may for instance be 25 degrees.

According to an advantageous embodiment, the yaw brake system further comprises a second brush comprising bristles, and which is arranged so as to contact the first surface and/or the second surface of the brake disc or ring for facilitating removal of dust from the one or more grooves formed in the first surface and/or the second surface.

The first and the second brush may for instance be arranged juxtaposed along the circumferential or angular direction of the brake disc or ring. The first and second brush may advantageously be arranged between two brake callipers on the brake disc or ring.

In one advantageous embodiment, the first brush and the second brush are oriented convergently, e.g. towards a peripheral part of the brake disc or ring. Thereby, it may be ensured that the dust is moved towards the peripheral part of the brake disc or ring independent of the yaw direction. The first brush may oriented in a first, positive angle compared to a radius of the brake disc or ring, and the second brush may be oriented in a second, negative angle compared to the radius of the brake disc or ring.

The positive angle may be between 2 and 25 degrees. Similarly the negative angle may be between 2 and 25 degrees.

In a second advantageous embodiment, the first brush comprises a housing having a first surface from which the bristles extend, said first surface and bristles facing towards the first surface and/or the second surface of the brake disc or ring, and wherein the housing comprises a first side, a second side, a first end, and a second end. The first side and the second side of the brush may be tapered in a direction towards a peripheral part of the brake disc or ring. Similar to the embodiment with two brushes, the first side of the first brush may for instance be oriented in a first, positive angle compared to a radius of the brake disc or ring, and the second side of the brush may oriented in a second, negative angle compared to the radius of the brake disc or ring. The positive angle and negative angle may again be between 2 and 25 degrees.

In yet another advantageous embodiment, the yaw brake system further comprises a first additional brush, wherein the first brush is arranged along a part of the first surface of the brake disc ring, and wherein the first additional brush is arranged along a part of the second surface of the brake disc or ring. Thus, the first brush and the first additional brush contacts opposing sides of the brake disc or ring and may thus facilitate removal of dust on both sides.

The first brush and the first additional brush may arranged on a common base, which is arranged at a peripheral part of the brake disc or ring so that the first brush and the first additional brush straddle a part of the brake disc or ring. The two brushes may thus form a brush unit. The brush unit may be loosely supported or arranged self-supporting on the brake disc or ring. It may also be pivotally supported along said base part.

In general all the aforementioned embodiments may comprise brushes along both the first and the second surface of the brake disc.

The bristles or brush hairs may have various stiffness. Further, it is contemplated that the bristles may comprise fibres having abrasives added to scour the surface of the brake disc or ring.

While the various embodiments are described with respect to the orientation of the brush or brushes, it is recognised that it is the arrangement of the bristles or brush hairs which is important. Thus, when the brush is for instance described as oriented in an angle compared to a radius of the brake disc or ring, this corresponds to that the bristles are arranged so that they contact the surface of the brake disc or ring in said orientation.

Further, it is instantly recognised that the brushes may also be used for yaw brakes in general, i.e. for yaw brakes without a groove in the brake disc.

According to yet another advantageous embodiment, the one or more grooves are angled with respect to the brake pads. Thereby, the grooves may provide a shearing force at an angle compared to the brake pads, thereby tending to push the sheared off dust outwards and away from the brake disc or ring. The grooves may for instance be oriented so that they form an angle to a tangent of the periphery of the brake disc, said angle being between 30 and 60 degrees, or between 40 and 50 degrees, e.g. around 45 degrees. These angles have been found to be particularly efficient for leading the sheared dust to the periphery and away from the brake disc.

The grooves are advantageously oriented in a substantial straight direction. However, they may also be curved. Further, the sidewalls of the grooves may also be curved, e.g. be slightly convex or concave.

According to a particular advantageous embodiment, the one or more grooves have a width of between 1.0 mm and 1.0 cm, advantageously between 1.5 and 8.0 mm, and more advantageously between 1.5 and 5.0 mm. It has been found that the anti-glazing function works best for relatively narrow grooves. If the grooves become too wide, the brake lining may enter the groove, which may then inadvertently start to be scraped off. Thereby, the function of the brake pads will be diminished. On the other hand, if the groove become too narrow, the anti-glazing effect is short lived due to clogging.

In an advantageous embodiment, a cross-sectional area of the one or more grooves increases towards a periphery of the brake disc. This will prevent the grooves from clogging up with dust material from the sheared off glazing. In one embodiment, side walls of the one or more grooves are diverging towards the periphery of the brake disc. Alternative or in addition thereto, the one or more grooves become deeper towards the periphery of the brake disc. This can be carried out by letting a bottom surface of the one or more grooves be sloping towards the periphery of the brake disc. This may also provide an increasingly easier passage to assist dust migration to the periphery of the disc.

In another advantageous embodiment, the one or more grooves have a sidewall that is inclined near a top portion of the sidewall so that the top portion forms an acute angle to the first surface or the second surface of the brake disc. By letting the sidewall being slightly inclined, the top portion may provide a better shearing action for removing the glazing. The acute angle may for instance be between 80 and 89.5 degrees, advantageously between 85 and 89.5 degrees, and more advantageously between 87.5 and 89.5 degrees. The acute angle may e.g. be 89 degrees.

In yet another advantageous embodiment, the one or more grooves have a sidewall that forms a sharp edge at the first surface or the second surface of the brake disc. This may enhance the shearing action even more.

According to one embodiment, the one or more grooves have an internal ridge within the one or more grooves. The ridge or protrusion may further prevent the groove from clogging up with the dust material from the sheared off glazing. A cross-sectional area of the ridge may be increasing towards a periphery of the brake disc.

The wind turbine may further comprise a yaw system for actively rotating the nacelle relative to the tower. This may for instance be carried out by use of a yaw drive. The yaw drive may for instance comprise a gear that engages a toothed yaw disc brake.

The brake disc or ring may be mounted on the tower, and the brake calliper may be mounted on a lower part of the nacelle. The brake disc may for instance comprise a peripheral part formed along the peripheral portion of an upper circumferential surface in the tower. In principle, the brake disc could also be provided in a lower part of the nacelle and the brake calliper be provided in a top part of the tower.

In one embodiment, the brake calliper takes up an inner part of the brake disc, i.e. the brake calliper is arranged inside the brake disc ring. The brake calliper may also be provided on the outer periphery of the brake disc.

According to an advantageous embodiment, the brake disc is provided with 1-20, advantageously 1-10 or 1-5 grooves on the first surface and/or the second surface of the brake disc. The grooves may be equally spaced around the brake disc. The brake disc may for instance be provided with four grooves on the first surface and/or the second surface. Thereby, it is ensured that the grooves often come into contact with the grooves but not too often.

The disc brakes may have various sizes, e.g. around 2 metres in diameter. However, in general the width, shape and orientation of the grooves are not changed, since the anti-glazing effect relates to the grooves and not the size of the brake disc.

The invention also provides a yaw brake system comprising a brake calliper and a brake disc or ring having a first side with a first surface and second side with a second surface, wherein the brake disc or brake ring is provided with one or more grooves formed in the first surface and/or the second surface. The grooves may be formed according to any of the afore-mentioned embodiments. The brake system may of course also be used for anti-glazing in other brake systems, preferably brake systems operating at low rotational speeds.

The invention further provides a groove cutter tool for forming grooves in a surface of a brake disc. The groove cutter tool comprises a connection means for connecting the groove cutter tool to the brake disc, a guide rod oriented in a predetermined angle and a groove cutter attached translationally to the guide rod.

The connection means may be provided between two side plates. The connection means may comprise two lock plates. The lock plates may be adjustably connected to centre plates.

The guide rod may further be connected to the two side plates in a pre-determined angle relate to a surface of a brake disc arranged in the groove cutting tool via the connection means. The guide rod may further be arranged in slots in the two slide plates so as to be able to vary the orientation of the guide rod.

The invention is explained in detail below with reference to embodiments shown in the drawings, in which
Fig. 1 shows a wind turbine,
Fig. 2 shows a wind turbine provided with a yaw brake according to the invention,
Fig. 3 shows a yaw brake comprising a brake disc and a number of brake callipers,
Fig. 4 shows a first embodiment of a yaw brake disc according to the invention,
Fig. 5 shows a first embodiment of a yaw brake disc according to the invention,
Fig. 6 shows a first embodiment of a groove provided in a surface of the yaw brake disc according to the invention,
Fig. 7 shows a second embodiment of a groove provided in a surface of the yaw brake disc according to the invention, and
Fig. 8 shows a third embodiment of a groove provided in a surface of the yaw brake disc according to the invention,
Fig. 9 shows a first embodiment of a brush unit for instalment on the brake disc or ring of the yaw brake system,
Figs. 10a and 10b show a first embodiment of a yaw brake system comprising cleaning brushes,
Fig. 11 shows a second embodiment of a yaw brake system comprising cleaning brushes,
Fig. 12 shows a third embodiment of a yaw brake system comprising cleaning brushes,
Fig. 13 shows a fourth embodiment of a yaw brake system comprising cleaning brushes,
Fig. 14 shows a groove cutter tool for forming a groove in a brake disc, and
Fig. 15 shows the groove cutter tool when attached to the brake disc.

### Detailed description of the Invention

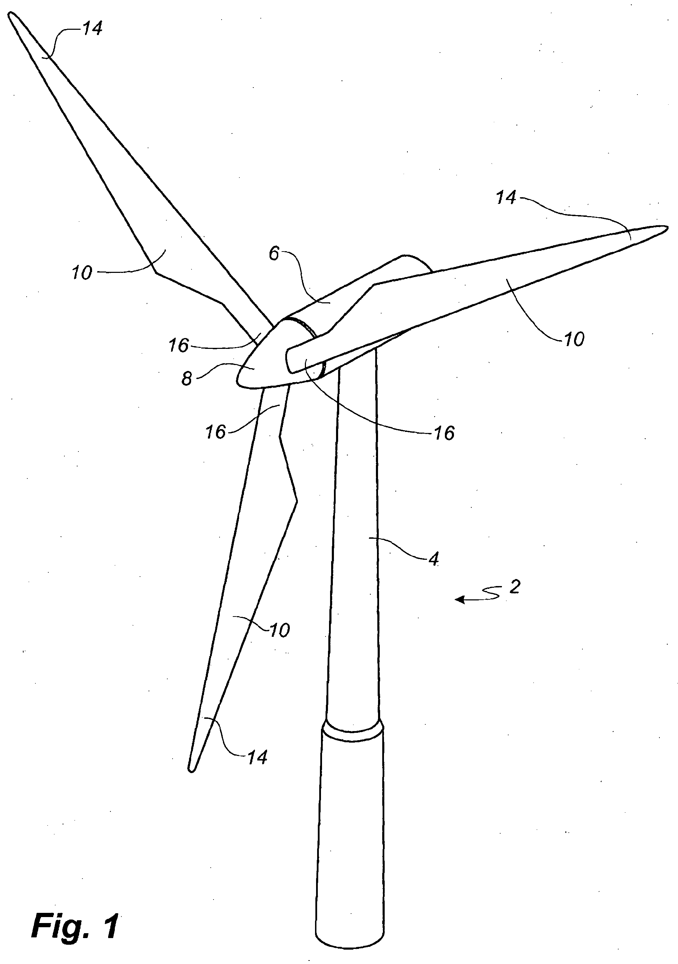

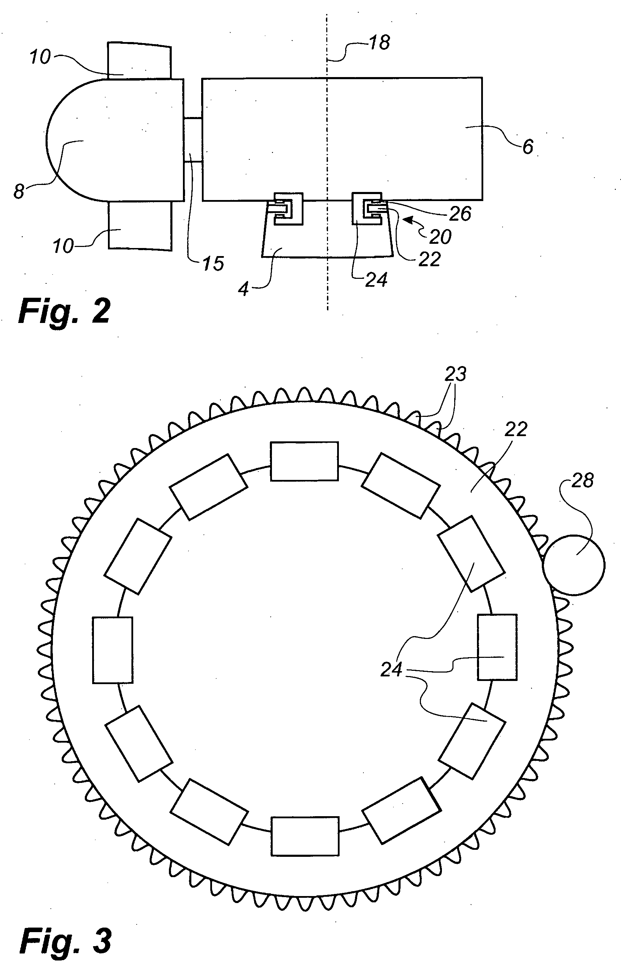

Figs. 1 and 2 illustrate a conventional modern upwind wind turbine 2 according to the so-called "Danish concept" with a tower 4, a nacelle 6 and a rotor with a substantially horizontal rotor shaft 15. The rotor includes a hub 8 and three blades 10 extending radially from the hub 8, each having a blade root 16 nearest the hub and a blade tip 14 farthest from the hub 8. The rotor has a radius denoted R.

The wind turbine 2 comprises a yaw system, which controls the orientation of the wind turbine rotor relative to the prevailing wind direction. The yaw system allows the nacelle 6 or machine housing to be rotated around a vertical axis 18 relative to the tower 4. The yaw system may for instance comprise a yaw drive (not shown), e.g. in form of a gear, that may engage a toothed yaw bearing. The toothing may be provided on the inner ring or outer ring of the yaw bearing. The yaw drive is typically attached to the nacelle 6, whereas the yaw bearing is made stationary with respect to the tower 4. After the yaw adjustment of the nacelle 6, the nacelle is immobilised by use of a yaw brake system 20 that comprises a brake disc 22 and a number of brake units that are arranged around the brake disc 22. The brake disc 22 may be integrated with the yaw bearing, or it may be a separate unit of the yaw and brake system. The brake units preferably comprises a brake calliper 24 having jaw parts that straddle the brake disc 22. The brake units are preferably hydraulically actuated, e.g. via a piston that applies brake force to brake pads 26 that engage with the brake disc 22 and in turn apply a braking torque due to the friction of the brake pads 26. However, other activation means may be applicable, such as electromagnetic or pneumatic activations means. Pistons and brake pads are preferably provided both on the upper jaw and the lower jaw of the calliper 24. Alternatively, only the upper jaw is provided with a brake pad, whereas the lower jaw may be provided with sliding pads.

The yaw system often comprises a toothed brake disc or ring fixed to the tower and a motor activated gear attached to the nacelle and meshing with the toothed gear so that activation of the motor results in a revolving of the nacelle thereby producing the yaw motion of the nacelle. The yaw drive or gear may also as previously mentioned be separated from the brake disc.

Fig. 3 shows an embodiment, where the toothed yaw bearing and the brake disc 22 are integrally formed. The disc 22 comprises teeth 23 provided on an outer periphery of the disc 22. A number of brake callipers 24 are arranged annually around the disc ring along the inner periphery. As previously mentioned, the teeth may alternatively be provided on the inner periphery of the ring, and the brake callipers may be arranged along the outer periphery of the ring. A yaw drive or gear 28 is provided to engage with the teeth 23 so as to yaw the nacelle 6 around the vertical axis 18 of the tower 4.

The yaw brake is during use exposed to various impurities, such as brake dust from the brake pads due to wear and airborne dust and oxidised disc residues. Since the yaw brakes are engaged for long periods of time and with a high braking force of several tons, the yaw brakes tend to compact the dust on the surface of the brake pads and disc, thereby in particular forming a sort of glazing on the surface of the brake pads. This problem is further enhanced by the fact that the brake disc is arranged in a horizontal position, whereby the dust settles on the disc and brake pads. As a result, the surface desired for efficient and quiet operation of the brake pads and the friction coefficient can be affected, which in turn may lead to brake noise and vibrations as well as poor durability for the brake pads.

It is not shown in Fig. 3, but the brake disc 22 according to the invention is provided with grooves. The grooves are at least formed in an upper surface of the brake disc 22 but may also be provided in the lower surface of the brake disc 22. Advantageously, the grooves are formed both in the upper and the lower surface of the brake disc 22. The grooves formed in the surface of the disc will function as an anti-glazing groove. Since the brake force is applied for long periods of time, the glazing will come into contact with the grooves, when the nacelle is yawed. Thereby, the grooves will shear off the glazing as it passes the groove. This is partly obtained by the pressure on the glazing being relieved, when it passes over the groove but may also be enhanced by having an appropriate groove shape and size.

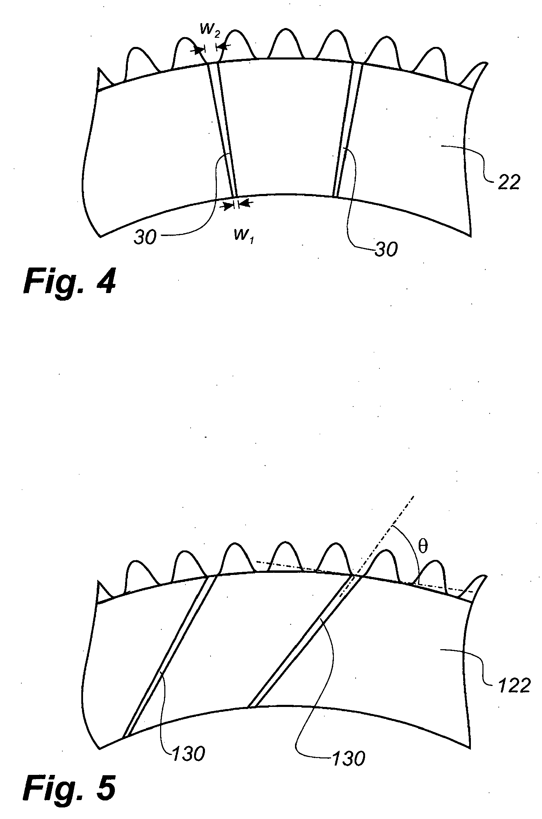

A first embodiment of a brake disc 22 according to the invention is shown in Fig. 4. The brake disc 22 is provided with a number of grooves 30 in an upper surface of the brake disc 22. The grooves 30 are in this embodiment oriented substantially in a radial direction of the brake disc 22 or equivalently substantially perpendicular to a tangent of the outer periphery of the brake disc 22. Further, the grooves 30 are also arranged substantially perpendicular to a tangent to the inner periphery of the brake disc 22. By orienting the grooves along the radial direction, the groove edges at the surface of the brake disc 22 are oriented substantially perpendicular to the movement direction of the brake pads, when they are moved across the brake disc 22. Thereby, the grooves 30 will apply a shearing force in a transverse direction of the brake pads. The grooves 30 have a first width *w₁* at a first periphery of the brake disc ring 22, and have a second width *w₂* at a second periphery of the brake disc ring 22. In the depicted drawing, the first periphery is the inner periphery and the second periphery is the outer periphery, but it could also be the other way around.

In one embodiment, sidewalls of the grooves 30 are parallel, whereby the first width *w₁* is equal to the second width *w₂*. However, according to an advantageous embodiment, the cross-sectional area of the grooves 30 is increasing towards the second periphery, which will enhance the effect of leading sheared off glazing dust towards the second periphery and away from the brake disc 22. This can be obtained by letting the bottom surface of the grooves be slightly sloping towards the second periphery. This may also provide a gravitational gradient to dust collected in the groove 30, thereby helping in leading the dust to the periphery and away from the brake disc 22. Alternatively or in addition thereto, the grooves 30 may also be diverging towards the second periphery of the brake disc 22 in which case the second width *w₂* is larger than the first width *w₁*.

A second embodiment of a brake disc 122 according to the invention is shown in Fig. 5. The brake disc 122 is provided with a number of grooves 130 in an upper surface of the brake disc 122. The grooves 130 are in this embodiment oriented substantially in an angle compared to the radial direction of the brake disc 122 so that the direction of the grooves form an angle θ with a tangent to the second periphery of the brake disc 122. The angle θ may for instance be approximately 45 degrees.

The grooves 130 have a first width *w₁* at the first periphery of the brake disc ring 122, and have a second width *w₂* at the second periphery of the brake disc ring 122. By angling the grooves 130 compared to the radial direction of the brake disc ring 122 and the brake pads, the edges of the grooves 130 may provide a shearing force at an angle compared to the brake pads, thereby tending to push the sheared off dust outwards and away from the brake disc ring 122.

In one embodiment, sidewalls of the grooves 130 are parallel, whereby the first width *w₁* is equal to the second width *w₂*. However, according to an advantageous embodiment, the cross-sectional area of the grooves 130 is increasing towards the second periphery, which will enhance the effect of leading sheared off glazing dust towards the second periphery and away from the brake disc 122. This can be obtained by letting the bottom surface of the grooves be slightly sloping towards the second periphery. Alternatively or in addition thereto, the grooves 130 may also be diverging towards the second periphery of the brake disc 122 in which case the second width *w₂* is larger than the first width *w₁*. Again, the first periphery may be the inner periphery of the brake disc and the second periphery be the outer periphery of the brake disc, or vice versa.

In the embodiment depicted in Fig. 5, the grooves 130 are shown as being angled in the same direction. However, some of the grooves may be angled the opposite way, i.e. so that θ may be 135 degrees. The grooves may for instance alternately be angled at 45 degrees and 135 degrees. Thereby, the opposite angled grooves will apply a similar shearing force, when the brake pads are moved in the opposite direction in relation to the brake disc ring 122. The various grooves may also be angled in different angles, e.g. 45 and 60 degrees.

In Figs. 4 and 5, the grooves are depicted as being straight. However, they may also be curved. Further, the sidewalls of the grooves may be curved, e.g. being slightly convex or concave.

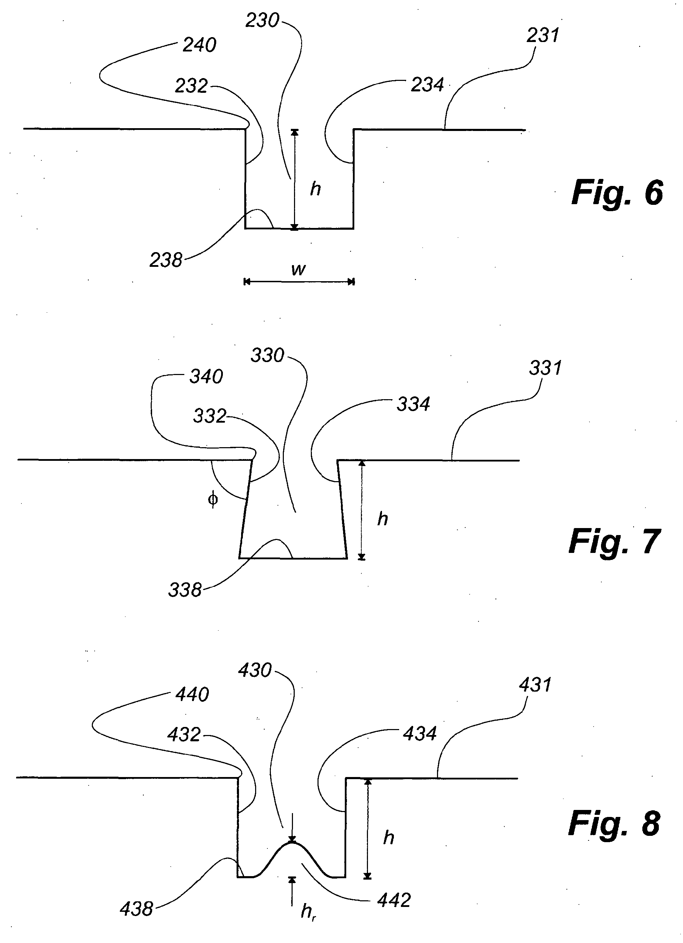

Figs. 6-8 show examples of various cross-sectional shapes that grooves according to the invention may have.

Fig. 6 shows a first embodiment of the cross-section of a groove 230. The groove 230 is formed in an upper surface 231 of the brake disc and comprises a first sidewall 232, a second sidewall 234, and a bottom surface 238. The grooves 330 have a height h and a width *w*. In this embodiment, the two sidewalls 232, 234 are substantially vertical. The sidewalls form a sharp edge 240 with the upper surface 231 of the brake disc, which enhances the shearing action of the groove.

Fig. 7 shows a second embodiment of the cross-section of a groove 330. The groove 330 is formed in an upper surface 331 of the brake disc and comprises a first sidewall 332, a second sidewall 334, and a bottom surface 338. The grooves 330 have a height *h* and a width w. In this embodiment, the two sidewalls 332, 334 are slightly inclined, so that the upper edge 340 forms an acute angle φ with the upper surface 331. By inclining the sidewalls 332, 334, the shearing action may be enhanced even further. The acute angle may for instance be 89 degrees.

Fig. 8 shows a third embodiment of the cross-section of a groove 430. The groove 430 is formed in an upper surface 431 of the brake disc and comprises a first sidewall 432, a second sidewall 434, and a bottom surface 438. The grooves 430 have a height h and a width *w.* In this embodiment, the groove 430 is provided with a protruding ridge 442 formed in the bottom surface 438. The ridge has a height *hᵣ*. The ridge or protrusion may prevent the groove 430 from clogging up with the dust material from the sheared off glazing.

### EXAMPLE 1

In a first example, the sidewalls of the groove are parallel so that the groove has a constant width of 3 mm along the entire groove. The height *h₁* of the groove at the first periphery of the brake disc is 2 mm, and the height *h₂* of the groove at the second periphery of the brake disc is 3 mm. The dimensions may apply to both the embodiment shown in Fig. 4 and the embodiment shown in Fig. 5

### EXAMPLE 2

In a second example, the sidewalls of the grooves are diverging towards the second periphery of the brake disc so that the first width *w₁* of the groove is 2 mm and the second width *w₂* of the groove is 4 mm. The height *h₁* of the groove at the first periphery of the brake disc is 2 mm, and the height *h₂* of the groove at the second periphery of the brake disc is 3 mm. The dimensions may apply to both the embodiment shown in Fig. 4 and the embodiment shown in Fig. 5

### EXAMPLE 3

In a third example, the grooves are dimensioned in the same way as in example 2 except for the bottom surface being provided with a ridge. The height and width of the ridge may increase towards the second periphery of the brake disc. The height and width of the ridge at the second periphery are both 1 mm.

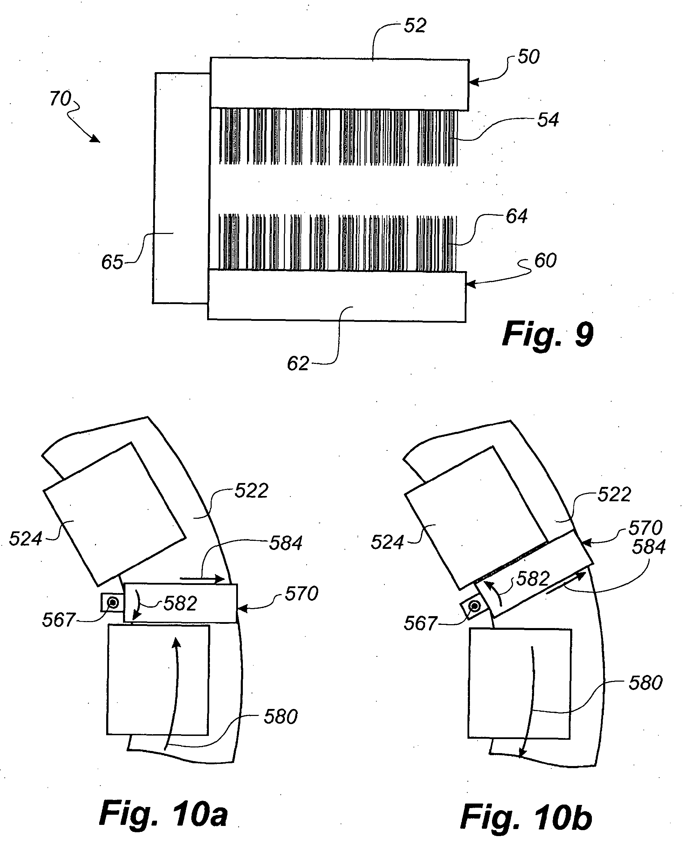

Figs. 9-13 show various embodiments, wherein the yaw brake system comprises one or more brushes that may facilitate removal of dust from the yaw brake disc and in particular from the groove of the brake disc. Such embodiments are particular advantageous in environments with high humidity, where the dust can become sticky and thus adhere to and accumulate in the groove.

Fig. 9 shows a first embodiment of a brush unit 70 for instalment on the brake disc or ring of the yaw brake system. The brush unit 70 comprises a first brush 50 and a second brush 60. The first brush 50 comprises a housing 52 from which a plurality of bristles 54 or brush hairs extent. The second brush 60 also comprises a housing 62 and a number of bristles 64, which extend from the housing. The first brush 50 and the second brush 60 are connected by a common base 65. Accordingly, the brush unit 70 may be arranged on a brake disc so that the first brush 50 extends along the first surface of the brake disc, and the second brush 60 extends along the second surface of the brake disc. Accordingly, the bristles 54 of the first brush 50 and the bristles 64 of the second brush will be disposed along and contact the first and second surface of the brake disc, respectively. Since, the brush unit 70 may be provided in an "open" configuration, the brush unit 70 may be self-supporting, when arranged on a brake disc.

Figs. 10a and 10b show a first embodiment of a yaw brake system comprising cleaning brushes. A plurality of brake callipers 524 are disposed along an inner periphery of a brake disc 522 formed as a ring. A first brush unit 570 is arranged between two juxtaposed brake callipers 524. The brush unit may be self-supporting and thus be loosely or pivotally supported about an axis 567. It may also be pivotally supported on the yaw drive. When the wind turbine as shown in Fig. 10a yaws in a yaw direction shown with arrow 580, the brush unit will turn in an opposite direction shown with arrow 582 until the first brush of the brush unit is stopped by one of the brake callipers 524. Then the first brush will be pushed along the surface of the brake disc 524, and since the first brush is oriented in an angle compared to a radius of the brake disc 524, the first brush will start to move dust towards an outer periphery of the brake disc as shown with arrow 584. When the wind turbine as shown in Fig. 10b yaws in an opposite direction, the brush unit 570 rotates in an opposite direction until the first brush of the brush unit is stopped by a juxtaposed brake calliper 524. Accordingly, the brush unit 570 is now oriented in an opposite angle compared to the yaw direction shown in Fig. 10a and thus still move dust towards the outer periphery of the brake disc 524.

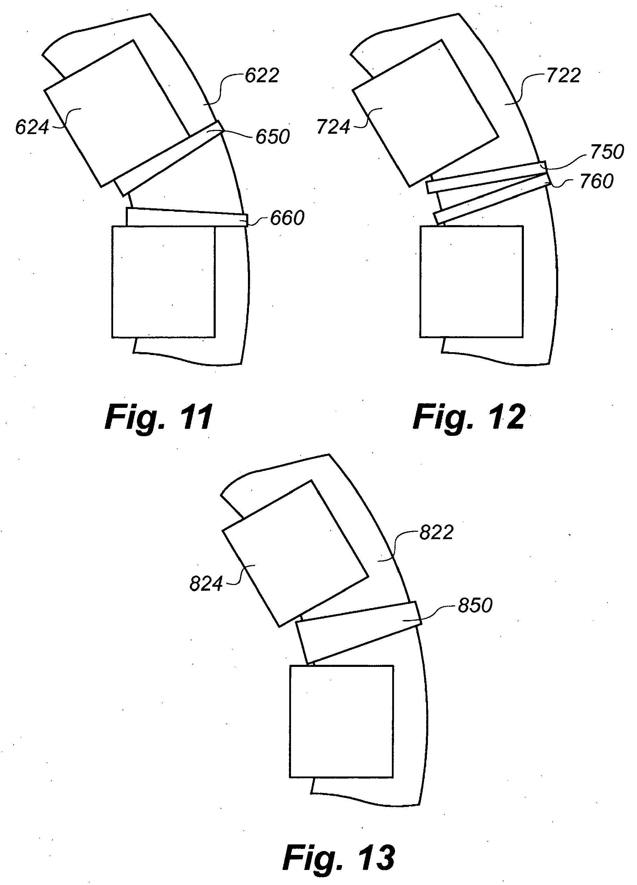

Fig. 11 shows a second embodiment of a yaw brake system comprising cleaning brushes. In this embodiment, a first brush 650 and a second brush 660 are arranged between two juxtaposed brake callipers 624 along the brake disc 622. Each of the two brushes 650, 660 comprises a first side and a second side, which are tapered towards the outer periphery of the brake disc 622. Thereby, at least one of the sides of the brushes 650, 660 is arranged with an angle compared to a radius of the brake disc 622. By using two brushes in the shown configuration, one brush will facilitate movement of the dust towards the outer periphery, when the wind turbine yaws in a first direction, whereas the other brush will facilitate movement of dust towards the outer periphery, when the wind turbine yaws in an opposite direction. The brushes 650, 660 may for instance be attached to sides of the brake callipers 624. The taper angle may for instance be 10 to 20 degrees.

Fig. 12 shows a third embodiment of a yaw brake system comprising cleaning brushes. In this embodiment, a first brush 750 and a second brush 760 are arranged between two juxtaposed brake callipers 724 along the brake disc 722. The two brushes 750, 760 are arranged so that they converge towards the outer periphery of the brake disc 722. Thereby, one brush will facilitate movement of the dust towards the outer periphery, when the wind turbine yaws in a first direction, whereas the other brush will facilitate movement of dust towards the outer periphery, when the wind turbine yaws in an opposite direction.

Fig. 13 shows a fourth embodiment of a yaw brake system comprising cleaning brushes, and in which a first brush 850 is arranged between two juxtaposed brake callipers 824 along the brake disc 822. The first brush 850 comprises a first side and a second side, which are tapered towards the outer periphery of the brake disc 822. Thereby, one of the sides of the brush will facilitate movement of the dust towards the outer periphery, when the wind turbine yaws in a first direction, whereas the other side of the brush will facilitate movement of dust towards the outer periphery, when the wind turbine yaws in an opposite direction.

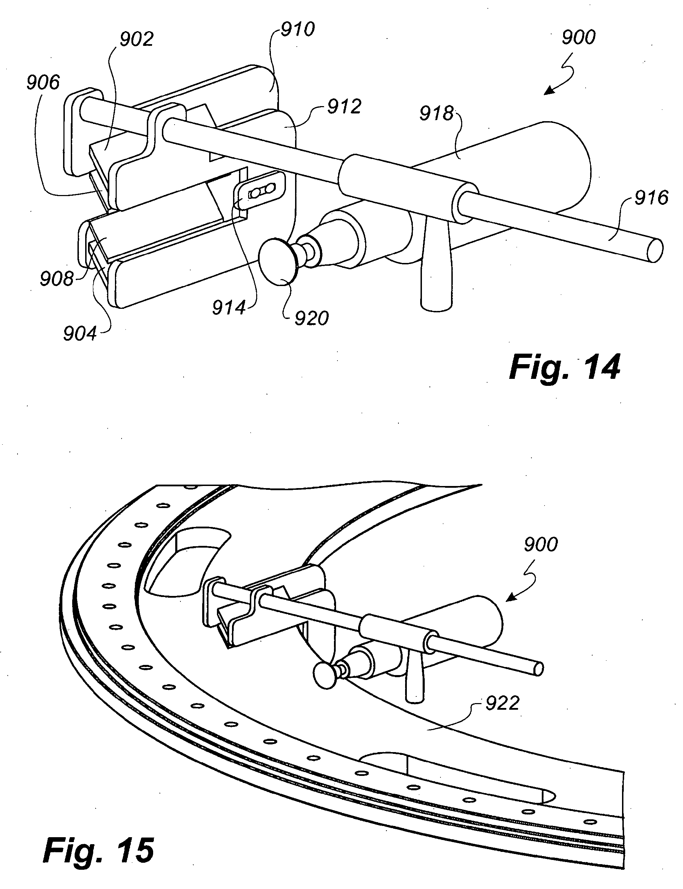

Fig. 14 shows a groove cutter tool 900 for cutting a groove in a surface of a brake disc 922, and Fig. 15 shows the groove cutter tool mounted to the brake disc 922. The groove cutter tool 900 comprises an upper (or first) centre plate 902 and a lower (or second) centre plate 904. The upper centre plate 902 and the lower centre plate 904 are connected to an adjustable lock plate 906 and an adjustable lower lock plate 908, respectively. The position may of the two lock plates 906, 908 may be adjusted between an open position and a locked position, where the two lock plates 906, 908 are fixedly engaged with the brake disc 922. The centre plates 902, 904 and the lock plates 906, 908 are mounted between a first side plate 910 and a second side plate 912. The plates 902, 904, 906, 908, 910, 912 together form an open configuration, which may take up a peripheral part of the brake disc 922 and straddle along the upper (or first) and lower (or second) surface of the brake disc 922. The groove cutter tool further comprises a guide rod 916, which is mounted between the two side plates 910, 912 and extends beyond the second side plate. A groove cutter 918 is arranged on the guiding rod and may be translated along the guide rod 915 in order to form a groove in the first or second surface of the brake disc 922. The groove cutter 918 may advantageously be a rotary cutter having a cutter disc 920. The profile of the cutter disc may be chosen to obtain a desired cross-sectional profile of the formed grooves.

The guide rod 916 may be oriented between the two side plates 910, 912 in a predetermined angle in order to obtain the desired groove orientation on the brake disc 922. The two side plates 910, 912 may for instance be mutually displaced in order to obtain the pre-determined angle. The two centre plates 902, 904 which are mounted between the two side plates 910, 912 may for instance be shaped as a parallelogram. The guide rod 916 may further be arranged in slots in the two side plates in order to be able to adjust the orientation of the guide rod 916 and hence the direction of the cut groove. Further, the groove cutter 918 may be height adjusted in order to control the height of the grooves. The angle of the groove cutter 918 may further be adjusted slightly in order to cut the grooves in a slight angle compared to a normal to the surface.

The side plates may be provided with adjustable stops 914, which may be adjusted to accommodate different radii of the brake disc or ring and/or to be able to vary the angular orientation of the guide rod 916. The guide rod 916 may also be curved so that the groove cutter 918 may be translated along a curve and thus cutting a groove according to said curve in the surface of the brake disc.

**List of reference numerals**

| | |
|---|---|
| 2 | wind turbine |
| 4 | tower |
| 6 | nacelle |
| 8 | hub |
| 10 | blade |
| 14 | blade tip |
| 15 | rotor shaft |
| 16 | blade root |
| 20 | yaw brake system |
| 22, 122, 522, 622, 722, 822 | brake disc |
| 23 | teeth |
| 24, 524, 624, 724, 822 | brake calliper |
| 26 | brake pads |
| 28 | yaw drive / gear |
| 30, 130, 230, 330, 430 | grooves |
| 231, 331, 431 | first surface / upper surface |
| 232, 332, 432 | first sidewall |
| 234, 334, 434 | second sidewall |
| 238, 338, 438 | bottom surface |
| 240, 340, 440 | upper edge |
| 442 | Ridge |
| 50, 650, 750, 850 | First brush |
| 52, 62 | Housing |
| 54, 64 | Bristles or brush hairs |
| 60, 660, 760 | Second brush |
| 567 | Pivot axias |
| 70, 570 | Brush unit |
| 580 | Yaw direction |
| 582 | Pivot direction |
| 584 | Dust movement direction |
| 900 | Groove cutter tool |
| 902 | Upper / first centre plate |
| 904 | Lower / second centre plate |
| 906 | Upper / first lock plate |
| 908 | Lower / second lock plate |
| 910 | First side plate |
| 912 | Second side plate |
| 914 | Stop plate |
| 916 | Guide rod |
| 918 | Groove cutter |
| 920 | Cutting disc |
| *h* | Height of groove |
| *hᵣ* | Height of ridge |
| *w* | Width of groove |
| *w₁* | Width of groove at first periphery of brake disc ring |
| *w₂* | Width of groove at second periphery of brake disc ring |

## Claims

1. A wind turbine (2) comprising:
- a number of wind turbine blades (10) extending substantially radially from a hub (8) on a main shaft (15) having a substantially horizontal axis, the wind turbine blades (10) together with the hub (8) forming a rotor, which can be put into rotation by wind,
- the main shaft (15) being rotatable mounted in a nacelle (6) that is mounted on top of a tower (4), wherein
- the nacelle (6) may be rotated around a vertical axis (18) in relation to the tower (4) so as to adjust the rotor in relation to a prevailing wind direction, and wherein the wind turbine (2) further comprises
- a yaw brake system (20) comprising a brake calliper (24) and a brake disc or ring (22) having a first side with a first surface and second side with a second surface, the yaw brake system (20), when activated, acting as a rotation restriction of the nacelle (6) in relation to the tower (4), wherein
- the brake disc or ring (22) is provided with one or more grooves (130, 230, 330, 430), formed in at least one of the first surface and the second surface, **characterised in that** the one or more grooves are angled with respect to a radial direction of the brake disc.

2. A wind turbine (2) according to claim 1 wherein the one or more grooves are oriented so that they form an acute angle with a tangent to the periphery of the brake disc.

3. A wind turbine according to any of the preceding claims, wherein the one or more grooves have a width of between 1.5 and 5.0 mm.

4. A wind turbine according to any of the preceding claims, wherein the one or more grooves are oriented so that they extend to a peripheral part of the brake disc or ring.

5. A wind turbine according to claim 1, wherein the one or more grooves are oriented so that they extend in a substantially transverse direction compared to the a brake pad (26) mounted on the brake caliper (24).

6. A wind turbine according to any of the preceding claims, wherein a cross-sectional area of the one or more grooves increases towards a periphery of the brake disc.

7. A wind turbine according to any of the preceding claims, wherein the yaw brake system further includes at least a first brush comprising bristles, and which is arranged so as to contact the at least one of the first surface and the second surface of the brake disc or ring (22) for facilitating removal of dust from the one or more grooves (130, 230, 330, 430) formed in the at least one of the first surface and the second surface.

8. A wind turbine according to claim 7, wherein the yaw brake system further includes a second brush comprising bristles, and which is arranged so as to contact the at least one of the first surface and the second surface of the brake disc or ring (22) for facilitating removal of dust from the one or more grooves (130, 230, 330, 430) formed in the at least one of the first surface and the second surface, the first brush and the second brush oriented convergently.

9. A wind turbine according to claim 7 or 8, wherein the first brush is oriented substantially along a radius of the brake disc or ring.

10. A wind turbine according to any of claims 7-9, wherein the first brush has an end which is loosely supported or pivotally supported.

11. A wind turbine according to any of claims 7-9, wherein the yaw brake system is further provided with one or more stops for limiting an angular movement of the first brush.

12. A wind turbine according to claim 11, wherein the limit for angular movement is 25 degrees.

13. A wind turbine according to any of claims 7-12, wherein the first brush comprises a housing having a first surface from which the bristles extend and having a first side and a second side wherein the first side and the second side of the first brush are tapered in a direction towards a peripheral part of the brake disc or ring.

14. A wind turbine according to any of the preceding claims, wherein the one or more grooves have an internal ridge within the one or more grooves and wherein a cross-sectional area of the ridge is increasing towards a periphery of the brake disc.

15. A wind turbine according to claim 14, wherein a cross-sectional area of the ridge is increasing towards a periphery of the brake disc.

## Patentansprüche

1. Windkraftanlage (2), umfassend:
- eine Anzahl von Rotorblättern (10), die sich im Wesentlichen radial von einer Nabe (8) an einer Hauptwelle (15) mit einer im Wesentlichen horizontalen Achse erstrecken, wobei die Rotorblätter (10) gemeinsam mit der Nabe (8) einen Rotor bilden, der durch Wind in Drehung versetzt werden kann,
- wobei die Hauptwelle (15) drehbar in einer Gondel (6) angebracht ist, die an der Oberseite eines Turms (4) angebracht ist, wobei
- die Gondel (6) um eine vertikale Achse (18) im Verhältnis zum Turm (4) gedreht werden kann, um den Rotor im Verhältnis zu einer vorherrschenden Windrichtung einzustellen, und wobei die Windkraftanlage (2) ferner Folgendes umfasst
- ein Gierbremssystem (20), das eine Bremszange (24) und eine Bremsscheibe oder einen Bremsring (22) mit einer ersten Seite mit einer ersten Fläche und einer zweiten Seite mit einer zweiten Fläche umfasst, wobei das Gierbremssystem (20) bei Aktivierung als eine Dreheinschränkung der Gondel (6) im Verhältnis zum Turm (4) dient, wobei
- die Bremsscheibe oder der Bremsring (22) mit einer oder mehreren Nuten (130, 230, 330, 430) versehen ist, die in wenigstens einer von der ersten Fläche und der zweiten Fläche gebildet sind, **dadurch gekennzeichnet, dass** die eine oder mehreren Nuten in Bezug auf eine Radialrichtung der Bremsscheibe abgewinkelt sind.

2. Windkraftanlage (2) nach Anspruch 1, wobei die eine oder mehreren Nuten derart ausgerichtet sind, dass sie einen spitzen Winkel mit einer Tangente zum Umfang der Bremsscheibe bilden.

3. Windkraftanlage nach einem der vorangehenden Ansprüche, wobei die eine oder mehreren Nuten eine Breite von zwischen 1,5 und 5,0 mm aufweisen.

4. Windkraftanlage nach einem der vorangehenden Ansprüche, wobei die eine oder mehreren Nuten derart ausgerichtet sind, dass sie sich zu einem Umfangsteil der Bremsscheibe oder des Bremsrings erstrecken.

5. Windkraftanlage nach Anspruch 1, wobei die eine oder mehreren Nuten derart ausgerichtet sind, dass sie sich im Wesentlichen in einer Querrichtung im Vergleich zu einem Bremsklotz (26) erstrecken, der an der Bremszange (24) angebracht ist.

6. Windkraftanlage nach einem der vorangehenden Ansprüche, wobei ein Querschnitt der einen oder mehreren Nuten zu einem Umfang der Bremsscheibe hin zunimmt.

7. Windkraftanlage nach einem der vorangehenden Ansprüche, wobei das Gierbremssystem ferner wenigstens eine erste Bürste beinhaltet, die Borsten umfasst und derart angeordnet ist, dass sie in Kontakt mit wenigstens einer von der ersten Fläche und der zweiten Fläche der Bremsscheibe oder des Bremsrings (22) tritt, um das Entfernen von Staub aus der einen oder den mehreren Nuten (130, 230, 330, 430) zu erleichtern, die in der wenigstens einen von der ersten Fläche und der zweiten Fläche gebildet sind.

8. Windkraftanlage nach Anspruch 7, wobei das Gierbremssystem ferner eine zweite Bürste beinhaltet, die Borsten umfasst und derart angeordnet ist, dass sie in Kontakt mit wenigstens einer von der ersten Fläche und der zweiten Fläche der Bremsscheibe oder des Bremsrings (22) tritt, um das Entfernen von Staub aus der einen oder den mehreren Nuten (130, 230, 330, 430) zu erleichtern, die in der wenigstens einen von der ersten Fläche und der zweiten Fläche gebildet sind, wobei die erste Bürste und die zweite Bürste konvergent ausgerichtet sind.

9. Windkraftanlage nach Anspruch 7 oder 8, wobei die erste Bürste im Wesentlichen entlang einem Radius der Bremsscheibe oder des Bremsrings ausgerichtet ist.

10. Windkraftanlage nach einem der Ansprüche 7-9, wobei die erste Bürste ein Ende aufweist, das lose abgestützt oder schwenkbar abgestützt ist.

11. Windkraftanlage nach einem der Ansprüche 7-9, wobei das Gierbremssystem ferner mit einem oder mehreren Anschlägen zum Begrenzen einer Winkelbewegung der ersten Bürste versehen ist.

12. Windkraftanlage nach Anspruch 11, wobei die Begrenzung der Winkelbewegung 25 Grad beträgt.

13. Windkraftanlage nach einem der Ansprüche 7-12, wobei die erste Bürste ein Gehäuse mit einer ersten Fläche umfasst, von der sich die Borsten erstrecken, und eine erste Seite und eine zweite Seite aufweist, wobei die erste Seite und die zweite Seite der ersten Bürste in einer Richtung zu einem Umfangsteil der Bremsscheibe oder des Bremsrings hin verjüngt sind.

14. Windkraftanlage nach einem der vorangehenden Ansprüche, wobei die eine oder mehreren Nuten einen inneren Grat in der einen oder den mehreren Nuten aufweisen, und wobei ein Querschnitt des Grats zu einem Umfang der Bremsscheibe hin zunimmt.

15. Windkraftanlage nach Anspruch 14, wobei ein Querschnitt des Grats zu einem Umfang der Bremsscheibe hin zunimmt.

## Revendications

1. Turbine éolienne (2) comprenant :
- un nombre d'aubes de turbine éolienne (10) s'étendant sensiblement radialement à partir d'un moyeu (8) sur un arbre principal (15) ayant un axe sensiblement horizontal, les aubes de turbine éolienne (10) conjointement avec le moyeu (8) formant un rotor, qui peut être mis en rotation par le vent,
- l'arbre principal (15) étant rotatif monté dans une nacelle (6) qui est montée par-dessus une tour (4), dans laquelle
- la nacelle (6) peut être mise en rotation autour d'un axe vertical (18) par rapport à la tour (4) afin d'ajuster le rotor par rapport à une direction de vent dominante, et dans laquelle la turbine éolienne (2) comprend en outre
- un système de frein de lacet (20) comprenant un étrier de frein (24) et un disque ou cylindre de frein (22) ayant un premier côté avec une première surface et un second côté avec une seconde surface, le système de frein de lacet (20), lorsqu'il est activé, servant de restriction de rotation de la nacelle (6) par rapport à la tour (4), dans laquelle
- le disque ou cylindre de frein (22) est pourvu d'une ou de plusieurs rainures (130, 230, 330, 430) formées dans au moins une parmi la première surface et la seconde surface, **caractérisée en ce que** la ou les rainures sont inclinées par rapport à une direction radiale du disque de frein.

2. Turbine éolienne (2) selon la revendication 1, dans laquelle la ou les rainures sont orientées pour qu'elles forment un angle aigu avec une tangente à la périphérie du disque de frein.

3. Turbine éolienne selon l'une quelconque des revendications précédentes, dans laquelle la ou les rainures ont une largeur d'entre 1,5 et 5,0 mm.

4. Turbine éolienne selon l'une quelconque des revendications précédentes, dans laquelle la ou les rainures sont orientées pour qu'elles s'étendent jusqu'à une partie périphérique du disque ou cylindre de frein.

5. Turbine éolienne selon la revendication 1, dans laquelle la ou les rainures sont orientées pour qu'elles s'étendent dans une direction sensiblement transversale par rapport à une plaquette de frein (26) montée sur l'étrier de frein (24).

6. Turbine éolienne selon l'une quelconque des revendications précédentes, dans laquelle une superficie de section transversale de la ou des rainures augmente vers une périphérie du disque de frein.

7. Turbine éolienne selon l'une quelconque des revendications précédentes, dans laquelle le système de frein de lacet inclut en outre au moins une première brosse comprenant des poils, et qui est agencée afin d' entrer en contact avec l'au moins une parmi la première surface et la seconde surface du disque ou cylindre de frein (22) pour faciliter l'élimination de poussière de la ou des rainures (130, 230, 330, 430) formées dans l'au moins une parmi la première surface et la seconde surface.

8. Turbine éolienne selon la revendication 7, dans laquelle le système de frein de lacet inclut en outre une seconde brosse comprenant des poils, et qui est agencée afin d'entrer en contact avec l'au moins une parmi la première surface et la seconde surface du disque ou cylindre de frein (22) pour faciliter l'élimination de poussière de la ou des rainures (130, 230, 330, 430) formées dans l'au moins une parmi la première surface et la seconde surface, la première brosse et la seconde brosse étant orientées de façon convergente.

9. Turbine éolienne selon la revendication 7 ou 8, dans laquelle la première brosse est orientée sensiblement le long d'un rayon du disque ou cylindre de frein.

10. Turbine éolienne selon l'une quelconque des revendications 7 à 9, dans laquelle la première brosse a une extrémité qui est supportée de façon lâche ou supportée de façon pivotante.

11. Turbine éolienne selon l'une quelconque des revendications 7 à 9, dans laquelle le système de frein de lacet est en outre pourvu d'une ou de plusieurs butées pour limiter un mouvement angulaire de la première brosse.

12. Turbine éolienne selon la revendication 11, dans laquelle la limite pour le mouvement angulaire est 25 degrés.

13. Turbine éolienne selon l'une quelconque des revendications 7 à 12, dans laquelle la première brosse comprend un logement ayant une première surface à partir de laquelle les poils s'étendent et ayant un premier côté et un second côté, dans laquelle le premier côté et le second côté de la première brosse sont diminués dans une direction vers une partie périphérique du disque ou cylindre de frein.

14. Turbine éolienne selon l'une quelconque des revendications précédentes, dans laquelle la ou les rainures ont une arête interne à l'intérieur de la ou des rainures et dans laquelle une superficie de section transversale de l'arête augmente vers une périphérie du disque de frein.

15. Turbine éolienne selon la revendication 14, dans laquelle une superficie de section transversale de l'arête augmente vers une périphérie du disque de frein.
